# EUROPEAN PATENT APPLICATION

(11) **EP 4 597 119 A1**
(43) Date of publication of application: **06.08.2025**
(21) Application number: 24154713.2
(22) Date of filing: 30.01.2024
(51) Int. Cl.: G01P 15/125, G01P 21/00, G01P 15/08

(54) **MASS DEFLECTION SELF-TESTING OF A MEMS ACCELEROMETER**

(71) Applicant: Murata Manufacturing Co., Ltd., Nagaokakyo-shi, Kyoto 617-8555 (JP)
(72) Inventor: AALTONEN, Lasse, 02240 Espoo (FI)
(74) Representative: Boco IP Oy Ab

(57) **Abstract**

The present invention relates to a method for self-testing a capacitive MEMS accelerometer comprising a first proof mass and a second proof mass, the first and second proof masses arranged in double differential configuration, a state machine to implement the self-testing method and a MEMS device comprising at least one capacitive MEMS accelerometer. The method applies a bias pattern comprising alternating bias periods and readout periods. Self-test comprises deflection states and return states, and success or failure of each self-test state is determined.

## Description

### Field

The present disclosure relates to a method, a state machine and a MEMS device. More particularly, the present disclosure relates to a method for mass deflection self-testing of a capacitive MEMS accelerometer, a state machine to control such method and a MEMS device comprising at least one capacitive MEMS accelerometer.

### Background

MEMS stands for Micro-Electro-Mechanical Systems. It refers to a technology that integrates mechanical elements, sensors, actuators, and electronics on a common silicon substrate through microfabrication technology. Essentially, MEMS devices are tiny mechanical devices that are integrated with electronic circuits to create systems with unique functionalities.

MEMS accelerometers are sensors that measure the acceleration forces to which they are subjected. These devices are commonly used in various applications such as automotive systems, consumer electronics, and industrial equipment.

A MEMS accelerometer comprises one or more proof masses. The proof mass is the part of the accelerometer that moves in response to acceleration. It is typically a small, suspended mass that experiences displacement relative to a reference frame it is anchored to via a suspension system, when the device is subjected to acceleration forces. The suspension system is designed to hold the proof mass in place when not subject to acceleration, while allowing the proof mass to move in response to external forces. Suspension provides stability and accurate sensing of acceleration. A typical suspension system comprises one or more anchors and one or more springs suspending the proof mass to respective anchors.

Typical MEMS accelerometers use capacitive sensing techniques. One or more sensing capacitors are used to measure displacement of the proof mass. As the proof mass moves, the distance and thus the capacitance between the proof mass and fixed electrodes changes, allowing the measurement of the acceleration. Fixed electrodes of sensing capacitors are typically referred to as stators. The proof mass may be referred to as a rotor, although motion of a typical MEMS accelerometer proof mass is not rotational but linear.

A MEMS accelerometer may further comprise electronic circuits for processing signals generated by the sensing capacitors. These circuits amplify, filter, and/or convert the capacitance changes into output data, such as a voltage or a digital signal that corresponds to the measured acceleration.

Mass Deflection Self-testing (MOST) is a method used in MEMS accelerometers to check the functionality and integrity of the device. The mass-deflection self-testing technique involves applying a known force or acceleration to the MEMS accelerometer and then measuring the resulting deflection of the proof mass within the device. Application of known force can be implemented electrically; in which case it is referred to as biasing. Capacitive electrodes, referred herein also as sensing capacitors, may be used for biasing by applying a voltage over the gap between the capacitive electrodes between the proof mass and the stator or stators that causes a deflection of the proof mass. By analyzing this deflection, it can be determined whether output of the MEMS accelerometer matches the expected response. This process is typically automated and can be initiated at regular intervals or upon specific events to ensure the continued reliability and accuracy of the MEMS accelerometer.

During the self-testing process, the MEMS accelerometer can assess whether any degradation or failure has occurred within the device. Any discrepancies between the expected and measured deflection values, failure to reach the minimum required deflection magnitude and/or failure to return to a rest position before expiry of a return period and/or within a return time window after deflection is discontinued can indicate potential issues, such as mechanical fatigue, material degradation, or electronic faults. The mass deflection self-testing can detect issues such as insufficient proof mass motion range or cases where capacitive signal value indicating position of the proof mass does not return to the initial value that preceded the self-testing. This kind of error of the capacitive signal value is sometimes referred in the field as an offset error and may be due to mechanical or electrical problems.

Detecting such mechanical or electrical problems early can help prevent the malfunction of the accelerometer and ensure the accuracy of its measurements, thereby improving the overall reliability of the system in which it is employed. Overall, mass-deflection self-testing plays a crucial role in maintaining the performance and reliability of MEMS accelerometers, enabling them to provide accurate and consistent data for various applications that require precise measurement of acceleration forces.

### Description of the related art

Capacitive microelectromechanical sensors have become part of many consumer devices and they are used also in a variety of safety critical applications, such as electronic stability control (ESC) in vehicles. Especially in the safety related applications, it is important to identify potential failures in mechanical or electrical signal paths of the capacitive sensor.

US9383860B2 discloses circuitry for time multiplexed detection of an output signal from a capacitive MEMS sensor's output transducer, so that one acceleration channel is tested at the time.

A single differential MEMS accelerometer can also be tested in parallel mode when clocking of channels is mutually identical and during biasing, each channel has independent selection between deflection or no-deflection (return) phases. However, as will be presented, robust self-test of a double differential MEMS accelerometer requires time-multiplexing.

US10323957B2 discloses a circuitry for intermittent deflection bias generation. In this prior art the proof mass is deflected using a biasing voltage pattern, in which intermittent bias phases alternate repeatedly with readout phases.

EP3404422A1 Discloses a high voltage excitation circuit to produce a double differential excitation circuit for a capacitive transducer, such as a MEMS capacitive transducer. A single high voltage is applied to the transducer as two consecutive stimuli with opposite polarities.

### Summary

The following embodiments are exemplary. Although the specification may refer to "an", "one", or "some" embodiment(s), this does not necessarily mean that each such reference is to the same embodiment(s), or that the feature only applies to a single embodiment. Single features of different embodiments may be combined to provide further embodiments.

It is to be understood that the apparatus is configured to perform the corresponding method, although in some cases only the apparatus or only the method are described.

An object is to provide a method and apparatus to solve the problem of self-testing a differential MEMS accelerometer, in particular a double differential MEMS accelerometer. Objects of the present invention are achieved with a method according to the claim 1. The objects of the present invention are further achieved with a state machine according to the claim 11 and a MEMS device according to the claim 12.

The preferred embodiments of the invention are disclosed in the dependent claims.

According to a first aspect, a method for self-testing a capacitive MEMS accelerometer comprising a first proof mass and a second proof mass is provided. The first and second proof masses of the capacitive MEMS accelerometer are arranged in double differential configuration. The first proof mass is associated with two sensing capacitors (C1, C2) configured to capacitively detect position of the first proof mass in relation to a first stator and a second stator, and the second proof mass is associated with two sensing capacitors (C3, C4) configured to capacitively detect position of the second proof mass in relation to a third stator and a fourth stator. The first stator is electrically coupled to the third stator and the second stator is electrically coupled to the fourth stator. The method comprises deflecting the first proof mass and the second proof mass in a first direction by applying a first bias voltage across the sensing capacitor (C1) of the first stator and across the sensing capacitor (C3) of the third stator during bias periods of a bias voltage pattern. The bias voltage pattern is a repeating pattern comprising intermittent bias periods and readout periods, wherein a deflecting bias voltage is selectively applied during bias periods, no deflecting bias voltage is applied during readout periods, and wherein said bias voltage pattern is repeated with a frequency that is above a resonance frequency and/or a -3dB bandwidth of the capacitive MEMS accelerometer. The method comprises obtaining, during each readout period, a first output data representing a proof mass equivalent capacitance signal (C1-C2) of the first proof mass, and a second output data representing a proof mass equivalent capacitance signal (C3-C4) of the second proof mass, wherein the first output data and the second output data are obtained at mutually different times during the readout period.

According to some embodiments, the method comprises: during each readout period, obtaining a third output data representing a sum capacitance value (C1+C2) of the first proof mass and a fourth output data representing a sum capacitance value (C3+C4) of the second proof mass, wherein each of the first output data, the second output data, the third output data and the fourth output data are all obtained during the readout period, and calculating a first normalized differential capacitance value by dividing the first output data with the third output data and calculating a second normalized differential capacitance value by dividing the second output data with the fourth output data.

According to some embodiments, the method further comprises discontinuing said applying the first bias voltage upon determining, based on said first and second output data, or based on said first and second normalized differential capacitance values, that deflection of any one of the first proof mass and the second proof mass by the bias voltage pattern has reached a first minimum required deflection magnitude, or upon determining expiry of a first predetermined maximum deflection period. After said discontinuing, applying the bias pattern without applying any deflecting bias voltage during bias periods for causing the first and second proof mass to return towards a rest position.

According to some embodiments, the method further comprises, while applying the bias pattern without applying any deflecting bias voltage during bias periods, obtaining the first and second output data, and, optionally the third and fourth output data, and determining, based on average of the first and second output data, or optionally based on average of the first and second normalized differential capacitance values, that the first proof mass and the second proof mass have reached the rest position, or determining an expiry of a first return period.

According to some embodiments, the method further comprises, upon determining that the first proof mass and the second proof mass have reached the rest position, or upon expiry of the first return period, applying a second bias voltage across the sensing capacitor (C2) of the second stator and across the sensing capacitor (C4) of the fourth stator during bias periods for deflecting the first proof mass and the second proof mass in a second direction opposite to the first direction, and obtaining the first and second output data, and optionally obtaining the third and fourth output data and calculating the first normalized differential capacitance value and the second normalized differential capacitance value. The method further comprises discontinuing said applying the second bias voltage upon determining, based on said first and second output data, or optionally based on said first and second normalized differential capacitance values, that deflection of any one of the first proof mass and the second proof mass has reached a second minimum required deflection magnitude, or upon expiry of a second predetermined maximum deflection period. After said discontinuing, applying the bias voltage pattern without applying any deflecting bias voltage during bias periods to cause the first and second proof mass to return towards the rest position. The method comprises, while applying the bias voltage pattern without applying any deflecting bias voltage during bias periods, obtaining the first and second output data, and, optionally the third and fourth output data, and determining, based on average of the first and second output data, or based on average of the first and second normalized differential capacitance values, that the first proof mass and the second proof mass have reached the rest position, or determining an expiry of a second return period.

According to some embodiments, the self-text comprises one or two deflection parts each comprising deflecting the first and second proof masses by applying the respective first or second bias voltages. A deflection part of the self-testing is deemed to pass, if discontinuing said applying the respective first or second bias voltage during bias periods of the bias voltage pattern is performed upon determining that deflection of the first proof mass or the second proof mass has reached the respective first or second minimum required deflection magnitude before expiry of the respective first or second predetermined maximum deflection period. The deflection part of the self-testing is deemed to fail, if said discontinuing said applying the respective first or second bias voltage is performed upon expiry of a predetermined maximum deflection period.

According to some embodiments, the method comprises one or two return parts during which the first and second proof masses are caused to return towards the rest position by not applying any deflecting bias voltage during the bias periods. A return part of the self-testing is deemed to pass, if the first proof mass and the second proof mass have reached the rest position within the respective first or second predetermined maximum return period after discontinuing applying the respective first or second bias voltage, or if the first proof mass and the second proof mass have reached the rest position within a respective first or second return time window. The return part of the self-testing is deemed to fail, if it is determined that the predetermined first or second maximum return period has expired without the first proof mass and the second proof mass being determined to have reached the rest position, or if it is determined that the first proof mass and the second proof mass are not being determined to have reached the rest position within a respective first or second return time window.

According to some embodiments, the method further comprises waiting over a predetermined waiting period after the capacitive MEMS accelerometer has entered a self-test mode in which the bias voltage pattern is applied thereto, or a channel of a multi-channel capacitive MEMS accelerometer to be self-tested has been changed, and, after expiry of the predetermined waiting period, applying the bias voltage pattern without applying any deflecting bias voltage during the bias period, and obtaining a plurality of samples of the first output data and the second output data during the readout periods, and optionally further obtaining a plurality of samples of the third output data and the fourth output data. The method further comprises determining an offset value by averaging the plurality of samples of the first and second output data during the readout periods, averaging the plurality of first normalized differential capacitance values and second normalized differential capacitance values, and on basis of the offset value, determining at least one threshold value or a threshold window for determining whether the first proof mass and/or the second proof mass have reached the rest position.

According to some embodiments, the self-test can be repeated for a predetermined number of times, if any one part of the self-test was deemed to fail.

According to some embodiments, when repeating the self-test, the self-test is restarted from the step of applying the bias voltage pattern without applying the bias voltage during the bias period for redetermining the offset value.

According to a second aspect, a state machine configured to control the mass deflection self-testing of a capacitive MEMS accelerometer is provided. The self-testing is configured to apply a bias voltage pattern that is a repeating pattern comprising intermittent bias periods and readout periods, wherein a deflecting bias voltage is selectively applied during said bias periods and deflecting bias voltage is not applied during said readout periods, and wherein said bias voltage pattern is repeated with a frequency that is above a resonance frequency and/or a -3dB bandwidth of the capacitive MEMS accelerometer. The state machine comprises, in order of performance: i) a wait state for waiting over a predetermined waiting period after the capacitive MEMS accelerometer has entered into a self-test mode, or a channel to be self-tested has been changed, ii) an offset determination state for determining an offset value by averaging a plurality of samples of first and second output data during the readout periods of the bias voltage pattern, while the bias voltage pattern is applied without applying any deflecting bias voltage during the bias periods, iii) a first deflection state for deflecting the first proof mass and the second proof mass in a first direction by applying a first bias voltage across a sensing capacitor (C1) of a first stator and across a sensing capacitor (C3) of a third stator during bias periods of the bias voltage pattern, wherein the first stator is electrically coupled with the third stator, iv) a first return state for causing the first proof mass and the second proof mass to return towards a rest position by not applying any deflecting bias voltage during the bias periods across said sensing capacitors, v) a second deflection state for deflecting the first proof mass and the second proof mass in a second direction opposite to the first direction by applying a second bias voltage across a sensing capacitor (C2) of the second stator and across a sensing capacitor (C4) of the fourth stator, wherein the second stator is electrically coupled with the fourth stator, vi) a second return state for causing the first proof mass and the second proof mass to return towards the rest position by not applying any deflecting bias voltage across said sensing capacitors, and vii) an end state for determining, whether results of the first and second deflection states and first and second return states was determined as fail or pass, and if any one of these states was fail, optionally repeating the self-test starting from the offset determination state.

According to a third aspect, a MEMS device comprising at least one capacitive MEMS accelerometer is provided. The MEMS device further comprises circuitry implementing the state machine.

The present invention is based on the idea of deflecting differentially operating proof masses of the MEMS accelerometer with an intermittent bias voltage over sensing capacitors of proof masses at a frequency above the normal operation bandwidth of the accelerometer and reading output data between each two consecutive bias voltage application periods. Output data of the proof masses is measured independent from each other, while both proof masses are deflected simultaneously by a bias voltage pattern applied to sensing capacitors coupled to an electrically common stator. Deflection magnitude of the proof masses is controlled in real time based on determining the current deflection magnitude at each readout period to ensure that maximum allowed deflection magnitude never causes mechanical contacts between the proof masses and stators. Deflection of the proof masses is preferably repeated in two opposite deflection directions corresponding to positive and negative acceleration. A state machine may control the self-test process.

The present invention has the advantage that it provides a robust self-test with high tolerance to external acceleration during the self-test. The method also ensures that no mechanical contact between electrodes of the capacitive MEMS accelerometer occurs due to self-testing even if the self-test is performed in presence of external acceleration.

### Brief description of the drawings

In the following the invention will be described in greater detail, in connection with preferred embodiments, with reference to the attached drawings, in which
Figures 1A and 1B illustrate a double differential MEMS accelerometer.
Figure 2 is a simplified timing diagram.
Figure 3 illustrates states of a double differential MOST state machine.
Figure 4 is a schematic of an exemplary accelerometer mass deflection self-test system comprising a mass deflection self-test state machine (MOST STM).
Figure 5 shows simulated output of self-testing of three channels representing three different axes (X, Y, Z) of a three-axis double differential MEMS accelerometer.
Figure 6 illustrates digitized proof mass equivalent capacitance signals of an actual MOST measurement performed for a three-axis accelerometer.
Figure 7 illustrates measured MOST data of a case where measured polarity is deemed to fail on two axes.

### Detailed description

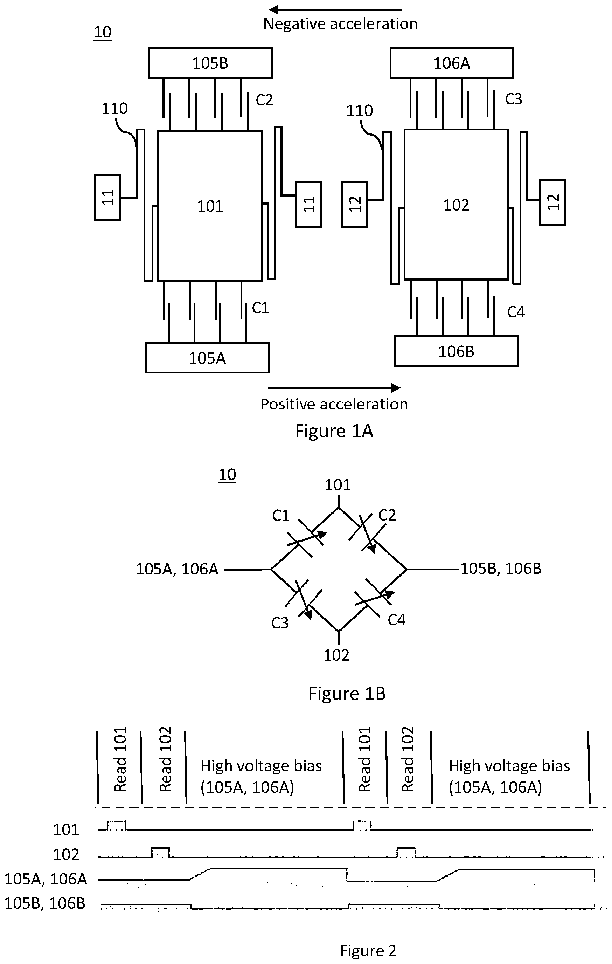

Figures 1A and 1B illustrate schematically a double differential MEMS accelerometer 10. The figure 1A illustrates schematically key mechanical elements of the double differential MEMS accelerometer 10. Various mechanical layouts are applicable. In this example, there are two proof masses 101, 102 suspended to anchors 11,12 by springs 110. In this example, springs 110 enable the proof masses 101, 102 to move along the plane in the direction of positive and negative acceleration as illustrated by arrows above and below the MEMS accelerometer. Stators 105A, 105B, 106A, 106B are fixed, so that motion along the direction of positive or negative acceleration causes capacitances C1, C2, C3, C4 of sensing capacitors formed by or attached to the proof masses 101, 102 and stators 105A, 105B, 106A, 106B to change. This change of capacitance indicates magnitude of detected acceleration in either of the two indicated directions. As known in the art, bias voltages are fed to accelerometer during its normal operation, for measuring acceleration. However, such bias voltages are fed symmetrically so that they do not cause deflection of the proof masses and can be referred to as non-deflecting bias voltages to differentiate from deflecting bias voltages used for intentionally deflect the proof masses for testing purposes.

For the double differential MEMS accelerometer 10 having two mechanically separate but electrically mutually coupled proof masses 101, 102, channel control during MDST becomes more complex in comparison to an accelerometer with single proof mass. This is because in the double differential MEMS accelerometer, the two proof masses 101, 102 have at least electrically coupled stators 105A, 105B that connect to the sensing capacitors of both proof masses. In a practical MEMS design, it is also possible that stators 105A and 106A and/or 105B and 106B are also mechanically coupled. When a bias voltage is fed to the electrically coupled stators 105A, 106A or 105B, 106B for deflecting the proof mass 101, 102, both proof masses 101, 102 will be deflected at same time. In this context, electrically coupled stators may also be referred to as a common stator. In this context, we refer to stator 105A as the first stator, stator 105B as the second stator, stator 106A as the third stator and stator 106B as the fourth stator. The first stator 105A and the third stator 106A are electrically coupled to each other, thus forming a first common stator, and the second stator 105B and the fourth stator 106B are electrically coupled to each other, thus forming a second common stator. The self-test deflection motion is different from motion of the proof masses when subject to acceleration. During self-test deflection, proof masses 101, 102 move in anti-acceleration mode, in which motion of proof masses is not visible in output signals used for detecting acceleration in the acceleration detection mode of the fully differential accelerometer. On the other hand, external acceleration is not visible in the averaged output signals obtained for detecting deflection of the double differential MEMS accelerometer in the mass deflection self-test operation mode. Since the two types of output signals are not dependent on each other, presence of external acceleration does not disable self-testing.

The electrical equivalent of the double differential MEMS accelerometer 10 is visualized in the Figure 1B. As can be seen from the Figure 1B, the first common stator, in other words the first and third stators (105A and 106A) are electrically the same, and the second common stator, in other words the second and fourth stators (105B and 106B) are electrically the same, in other words, in the same electrical potential. Depending on the mechanical construction of the MEMS accelerometer, electrically coupled stators may also be mechanically coupled, formed by parts of the same rigid stator structure. When the double differential MEMS accelerometer 10 is subject to positive acceleration, the respective fully differential capacitive acceleration detection signal is (C3-C1)+(C2-C4). When setting the electrically coupled stators (105A and 106A; 105B and 106B) to the high voltage for MDST purpose, and setting all other electrodes to ground voltage, the resulting electrostatic force will create a capacitive signal corresponding to a transfer function (C1+C3)-(C2+C4). Therefore, electrostatic deflection of the proof masses 101, 102 does not result in a signal that is equivalent to an acceleration detection signal caused by external acceleration. This difference affects MOST operation in multiple ways but can also be taken advantage of.

For detecting effect of deflection during MOST, at least two pieces of output data need to be detected. If only the normal, fully differential capacitive acceleration detection signal (C3-C1)+(C2-C4) was detected, this would ignore any external acceleration and offset occurring during the MOST. In the worst case, if the MDST was run in presence of high external acceleration, external acceleration and/or offset could result in an unwanted mechanical contact between sensing capacitors arranged between proof masses and stators.

The MDST method applies an intermittent reflection bias generation scheme, in which the proof mass is deflected using the biasing voltage pattern, in which intermittent, repeating bias phases alternate with readout phases. Bias and readout phases repeat at a rate that is for example between 100 and 200 times the bandwidth of the sensor element. Each deflecting bias voltage pulse incrementally changes the proof mass position away from its rest position (non-biased position), and the position or change of the position, also referred to as deflection, can be detected in real time during readout periods. During readout periods, non-deflecting bias voltage(s) are applied for readout. The rest position is determined at the start of MDST before any deflection, and returning of the deflected proof mass back to the rest position is determined in comparison to this determined rest position.

Bias and readout phases repeat at a rate that is for example within a range extending from 10 to 1000 times the resonance frequency and/or -3dB bandwidth of the sensor element. Acceleration sensors are typically designed to have low-pass characteristic frequency response. The -3dB then refers to frequency at which the low-pass gain has decreased by 3dB compared with gain at ~0Hz. A low repeat rate in the range of 10 gives only modest detection time and/or magnitude resolution as proof mass moves significantly during a single bias phase, while a high repeat rate in range of 1000 times the bandwidth or more may increase data rate too much. A high repeat rate also causes technical challenges for implementing a suitable (very fast and rigid) high voltage source to be used as the bias voltage as well as challenges in dynamical adjustment of the bias voltage. A repeat rate of in range between 100 to 200 times the resonance frequency and/or above the -3dB bandwidth of the sensor element may be most suitable for this purpose, having good resolution but avoiding becoming unnecessarily heavy computationally. To prevent external acceleration from adversely effecting deflection of the proof mass for self-testing purpose, the bias voltage is preferably set to be somewhat (i.e. 10-30%) higher than an estimated voltage that would be needed for actual desired self-test deflection, but when the bias voltage is applied only during short bias periods, inertia of the proof mass causes it to be deflected only a portion of the maximum deflection during each bias voltage period. In other words, the idea of short, repeating bias voltage pulses is that each bias voltage pulse incrementally changes the position of the proof mass away from its rest position (non-biased position), and the position or change of the position of the proof mass can be detected in real time during readout periods between two bias phases. Change of the position of the proof mass from the rest position is herein referred to as deflection.

To avoid the problems depicted above, each deflection is preferably followed by reading separately output data from each proof mass, in other words capacitance at the proof mass 101, which yields a first proof mass equivalent capacitance value (C1-C2) and at the proof mass 102, which yields a second proof mass equivalent capacitance value (C3-C4). These two readings are performed between every two consecutive deflection periods during the entire deflection process. This process is illustrated in the simplified timing diagram shown in the figure 2, showing an example in which stator 105A, 106A is excited with repeating high voltage bias periods. During the readout period, capacitances at both proof masses 101, 102 are detected, one at a time. During the readout period, a readout signal, shown as a short pulse, is fed into one proof mass at a time. This enables capacitance of the respective, single proof mass into which the readout signal is fed to be detected. Read pulses are fed into the proof masses symmetrically and are thus not deflecting. By reading the proof mass equivalent capacitance values separately during the readout period, it is possible to track the differential signal level of each proof mass 101, 102 and prevent mechanical contact by the MDST deflection; the deflection process can be controlled by stopping any further MOST deflection when it is determined that the desired maximum deflection has been achieved.

Acceleration in fully differential mode is determined as the difference between two proof mass equivalent capacitance values (C1-C2) and (C3-C4), when the fully differential capacitive output signal is (C3-C1)+(C2-C4). In the MDST mode, for detecting deflection, a MDST mode capacitance output signal is determined as a sum: (C1-C2)+(C3-C4), which may be referred to as a sum mode capacitance value. Furthermore, sum capacitance values (C1+C2) and (C3+C4) may be detected for normalization purposes. According to some embodiments, obtaining the two sum capacitance values may require adding two further reading instances during readout periods between each bias period to enable reading each capacitance value at different time from any other capacitance value readings, but according to some embodiments, sum capacitance values may be obtained simultaneously with obtaining at least one of the proof mass equivalent capacitance values. Sum capacitance values are not usually affected by any movement of the proof masses, unless there is some non-linearity or asymmetry between the proof masses therein. Sum capacitance values can be used to calculate normalized differential capacitance values in post processing. The normalized differential capacitance values are determined by functions (C1-C2)/(C1+C2) and (C3-C4)/(C3+C4).

Normalized differential capacitance values are particularly useful for a so called gap modulating capacitive transducer, because normalization allows higher linearity. As is known in the art, a gap modulating capacitive transducer refers to a plate capacitor where the gap between the plates is changing. In the exemplary gap modulating capacitive transducer, capacitance (C1-C2) is inherently non-linear, but it can be linearized (normalized) by determining the normalized differential capacitance value (C1-C2)/(C1+C2). Adding the further readouts to the readout period decreases time available for each individual readout, if repeat rate of deflections is kept constant.

When only a single proof mass is measured at a time, sensitivity of the measurement is half compared to the fully differential capacitive output signal (C3-C1)+(C2-C4). The same applies to measuring sum capacitances (C1+C2) and (C3+C4) in MDST deflection, which also have half of the sensitivity of the sum capacitance, which would be (C1+C2+C3+C4) in normal operation mode.

Many MEMS accelerometer devices comprise more than one accelerometer, for example for measuring acceleration in different directions. A typical MEMS device comprises for example accelerometers for detecting two mutually orthogonal detection axes, or accelerometers for detecting three mutually orthogonal detection axes, for example x-, y- and z-axes. One or more of these accelerometers may be fully differential.

The clocking scheme that enables MDST of a fully differential MEMS accelerometer, using intermittent deflection phases and two readout phases, can also be used for that enables MDST of a single differential MEMS accelerometer. In such case, the same single proof mass equivalent capacitance value (C1-C2) may be detected at both readout phases, or the other readout phase may be let to be zero, in other words the other readout phase is omitted.

Each read sample is digitized and the MDST is controlled by means of a digital state machine based on the measured data. The timing scheme illustrated in the Figure 2 is valid also for return-phase, i.e. when the proof mass is allowed to settle to a non-biased position, in other words into a rest position in which it is not deflected intentionally by a deflecting bias. In this case the deflecting bias voltage applied on the stator 105A, 106A is set to ground during the HV bias phase, or more specifically, the deflecting bias voltage across sensing capacitors C1, C2, C3, and C4 is zeroed so that the deflecting, MDST biasing across capacitors is removed and biasing across sensing capacitors returns back to a non-deflecting, low-voltage symmetric bias.

### Mass Deflection Self-Test State Machine

A state machine (STM) for MDST (MOST STM) monitors the deflection magnitude caused by the repeating bias phases. Deflection magnitude is detected during the readout phases and MDST stops the proof mass deflection process when a predefined target deflection magnitude, in other words a minimum required deflection magnitude is reached. The repeating bias voltage pattern makes testing easier than applying a single, preset test voltage, because the applied test voltage value doesn't have to be exact. As known in the art, the pull-in voltage refers to a bias voltage that is sufficient to apply an electrostatic force to the proof mass that exceeds mechanic forces by springs suspending the proof mass such that if the pull-in voltage is allowed to affect the proof mass long enough, it will be pulled to a maximum deflection that typically causes the proof mass or the movable electrode(s) thereof to become in contact with a so called bumper, in other words a structure that mechanically limits the maximum deflection amplitude. By applying the bias voltage that exceeds the pull-in voltage, but only for short periods of time, deflection of the proof mass can be controlled such that it does not exceed a maximum value that would cause the proof mass to unintentionally become in contact with another structure.

Compared to traditional single differential MDST as disclosed in US10323957 B2, the state machine of MDST for double differential MEMS accelerometer is different. The state machine may be implemented by a processor, a field programmable gate array (FPGA) or as an ASIC.

We can assume that proof mass equivalent capacitance values (C1-C2) and (C3-C4) are digitized in any Nyquist type or oversampling type ADC, for example by using a successive approximation analog-to-digital converter (SAR ADC) or a Delta-Sigma ADC and decimation filtering. The first and second digitized proof mass equivalent capacitance signals are marked herein as A1_DEC=~C1-C2 and A2_DEC=~C3-C4. Polarity of digitized proof mass equivalent capacitance signals is always controllable, e.g. the first digitized proof mass equivalent capacitance signal A1_DEC can be configured to be -(C1-C2) to adjust deflection data from different proof masses to have mutually the same polarity.

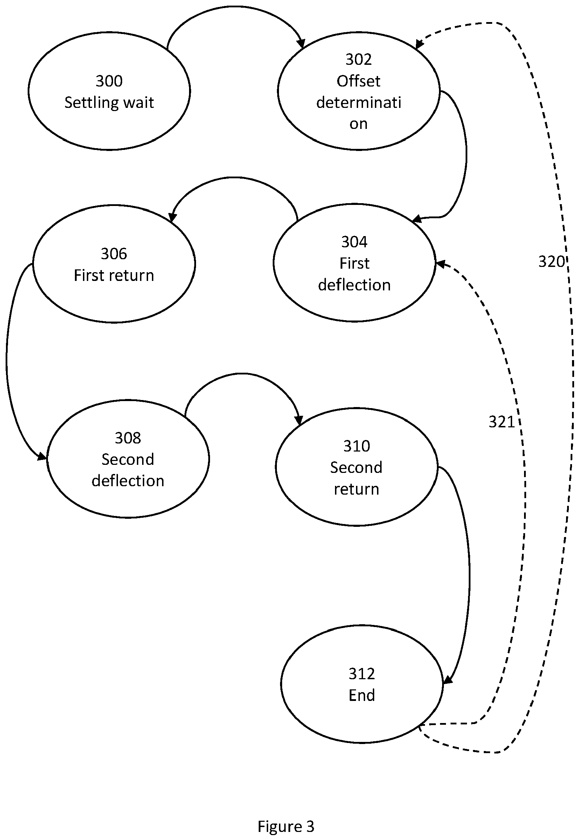

Figure 3 illustrates the main states of a double differential MOST state machine (STM) according to some embodiments. This STM shows MDST testing of a single channel. The STM is updated always when new data is available. When more than one channel is tested, at least some tests may be run in parallel, in which case each channel has its own MOST STM. If tests are run in series, a single MOST STM may be sufficient to control the self-test process itself. If more channels are to be tested, at least one upper level STM may be needed to ensure proper functioning of the self-test for example if one or more channels are disabled or one or more channels fail the self-test. The MDST STM enables relatively simple implementation for determining when the self-test or a phase thereof is to be interrupted, for generating self-test status information from each self-test phase and measuring time periods used for each self-test phase.

The first state is an initial settling wait state 300. The STM remains in this wait state 300 during a predefined settling waiting period. The settling waiting period may be needed for example if clocking of the system is changed when entering from normal operation mode into the MDST mode or when tested channel is changed. In the wait state 300, non-deflecting bias voltage(s) may be applied, but no deflecting bias voltage is applied, and no measurement data is obtained, or any obtained measurement data is discarded, because it is not useful.

In this context, the term self-testing a channel refers to self-testing performed by deflecting the proof mass(es) configured to measure acceleration about a single axis using pairs of electrically coupled stators, also referred to as a common stators. In a double differential accelerometer, biasing the pair of electrically coupled stators causes deflection of both proof masses, because both proof masses are deflected by these electrically coupled stators. For each self-test, at least two types of output data are detected as will be explained. Output data refers to a detected output capacitance value that is eventually digitized. Examples of output data are first and second proof mass equivalent capacitance signals, or the first and second digitized proof mass equivalent capacitance signals after digitizing. In the following example, we use the first and second proof mass equivalent capacitance signals as output data. Depending on the type of transducer used, proof mass equivalent capacitance signals may be for example current or voltage signals, whereas the digitized signals may be any desired type of digital signals.

Upon expiration of the predefined settling waiting period, the STM moves to an offset determination state 302. According to a preferred embodiment, offset data is obtained by averaging output data. Offset data may be obtained by averaging digitized proof mass equivalent capacitance signals. Averaging is performed over a predefined period. The predefined period may be determined for example as a number of clock cycles, or as a predefined or minimum number of samples obtained before any proof mass deflection is performed. For example, if the MEMS of the acceleration sensor time constant τ=1/w(-3db), averaging period is preferably between 1*τ and 100*τ, most preferably somewhere around 10*τ. The longer the averaging period, the more robust is the offset value, because averaging effectively removes effects of external disturbance. On the other hand, excess averaging period increases time required for the test run to be performed.

Purpose of offset data is to detect whether the proof mass returns to its intended rest position after deflection; after deflection and return, the offset should be the same as it was before deflection, or at least withing a predefined offset window with respect to the offset determined upon initiating the MDST deflection. In this context offset refers to an output data value that is received from the tested channel before deflection voltage is applied, as well as after the return period. The offset indicates that the proof mass is not exactly at its intended and/or assumed rest position, and/or there is some offset source present at any point of the signal path even when the proof mass is supposed to be in rest, and/or crosstalk occurs between adjacent samples and/or crosstalk occurs between different MEMS sensors, between MEMS sensor package structures, between bonding wires or between channels comprised in the MEMS device. For example, if there is no digital trimming of output signals received from the MEMS accelerometer, data received from the ADC or decimating filters may comprise parasitic offset that is not dependent on position of the proof mass. In normal acceleration measurement operation mode, any parasitic offset sources of the MEMS accelerometer are typically compensated, so that the digital output signal received at 0g acceleration is equal to 0 LSB. MDST mode significantly changes the operation of the MEMS accelerometer from the normal acceleration detection mode, and therefore it is not recommended to apply the digital offset compensation determined for normal acceleration detection mode during the MOST. For example, in the MDST mode, output data rate changes, accelerometer output is detected at different times on different channels and clocking scheme is different from the normal acceleration detection mode. Any changes in the analog clocking and MEMS biasing may cause different parasitic offsets in comparison to the normal accelerometer operation mode.

Calculated OFFSET=average(A1_DEC all collected data+A2_DEC all collected data), wherein "all_collected_data" refers to all samples of output data, such as the digitized proof mass equivalent capacitance signals, obtained during the period used for determining the offset to be used for MDST, prior to applying the bias voltage. Offset is determined based on average of output data obtained from the two proof masses.

Upon finalizing the offset determination state 302, the STM moves to the first deflection state 304, during which the proof masses are deflected either to positive or negative deflection direction by applying the intermittent, repeating bias voltage to one of the common stators of the double differentially arranged proof masses and obtaining desired at least two types of output data. The deflecting bias voltage applied during the bias periods of the first deflection state 304 is referred to as a first bias voltage. In this example, there are two types of output data, namely A1_DEC and A2_DEC, in other words the first and second digitized proof mass equivalent capacitance signals.

Duration of the first deflection state 304 depends on a two different conditions. If either of these conditions is deemed to be fulfilled, the STM moves (305) to the next state, namely a first return state 306, in which not the first bias voltage nor any other deflecting bias voltage is applied during bias periods. The first end condition is that a desired deflection threshold value of A1_DEC or A2_DEC is reached within a maximum allowed deflection period, in which case the first deflection test result is "pass". In connection to the first deflection state 304, the deflection threshold value may be referred to as a first predetermined minimum deflection. The second end condition is that a timeout occurs, which results in the first deflection test result being deemed as "fail", because the proof masses could not be deflected by the desired amount during the maximum allowed deflection period.

The deflection threshold value may be determined using an absolute value, i.e. absolute(A1_DEC) or absolute(A2_DEC). The absolute value depends on which proof mass is being tested. Alternatively, the deflection threshold value comparison may be performed using signed A1_DEC or A2_DEC data. In case of using signed A1_DEC or A2_DEC data for threshold comparison, it must be ensured that obtained deflection data has the same polarity in the digitized proof mass equivalent capacitance signals A1_DEC and A2_DEC, and the deflection threshold value polarity shall be set according to deflection polarity of A1_DEC and A2_DEC to allow signal path polarity to be verified.

Upon finalizing the first deflection state 304, the STM proceeds to the first return state 306. The STM remains in the first return state 306, until a return state condition is fulfilled. The return state condition may be for example that a single sample of an averaged value digitized proof mass equivalent capacitance signals A1_DEC and A2_DEC, i.e. (A1_DEC+A2_DEC)/2, or that an average value of digitized proof mass equivalent capacitance signals A1_DEC and A2_DEC, i.e. (A1_DEC+A2_DEC)/2 calculated from a plurality of consecutive samples over a sliding window, is determined to fall within a predetermined return threshold window relative to the previously determined offset value, in which case the first return test result is "pass". Number of samples may be just one sample of each digitized proof mass equivalent capacitance signal, or a plurality of consecutive samples of each digitized proof mass equivalent capacitance signal, wherein the number of consecutive samples is between 2 and 200. Again, a long sampling period increases total length of the MDST process. If the STM remains in the first return state 306 until a maximum return period has expired, i.e. that a first return timeout passes, the first return test result is "fail", because the proof masses did not return to the rest position within the maximum predetermined first return period determined by the first return timeout. Instead of a first return timeout, a first return time window may be determined for the first return state 306, such that the first return test is deemed as "pass", if the first return state condition is achieved within the first return time window, and the first return test is deemed to "fail" if the first return state condition is achieved outside the first return time window. Preferably, the end time of the first return time window would then coincide with end of the first return period. By determining a return time window instead of just watching the ending point of the maximum return period, errors in which the proof mass(es) return to the rest position too quickly after discontinuation of deflection can be detected.

The return threshold window is preferably determined such that it includes the offset value and may allow a small deviation from the offset value. In the first deflection state 304, timeout refers to expiry of a first deflection period that starts upon entering the first deflection state 304.

During the first return state 306, the averaged value is independent of external acceleration when the differential sensor is fully symmetric. The threshold can be in the form of a value window, and if the average value of the digitized proof mass equivalent capacitance signals returns at a value within the value window before the timeout is reached, the first return test is deemed to "pass". In the first return state 306, the timeout refers to expiry of a first maximum return period that starts upon entering the first return state 306. After the first return state 306 has been completed, either passed or failed, the STM proceeds to the second deflection state 308, which is essentially similar to the first deflection state 304, except that deflection is caused in the opposite direction: if the first deflection state 304 was for deflecting the proof masses in the positive acceleration direction along an axis, the second deflection state 308 is for deflecting the proof masses in the negative acceleration direction along the same axis, or vice versa. The deflecting bias voltage applied during the bias periods of the second deflection state 308 is referred to as a second bias voltage. For causing a deflection in the direction opposite to the deflection in the first deflection state, the second bias voltage is applied to different capacitors of mutually coupled stators than the first bias voltage. For example, if capacitors C1 and C3 are used for deflection in the first deflection state 304, capacitors C2 and C4 are used for deflection in the second deflection state 308. Since the deflection direction is changed, the deflection threshold value polarity needs to be changed, unless absolute values are used for determining amount of deflection, in which case polarity of the deflection threshold value can be omitted, but on the other hand, also information about correctness of test polarity will then be omitted.

Like in the first deflection state 304, the second deflection state 308 may end upon reaching one of two end conditions. These are preferably the same end conditions as were used in the first deflection state 304. The first end condition is that A1_DEC or A2_DEC reaches a desired deflection threshold value, in which case the second deflection test result is "pass". In connection to the second deflection state 308, the deflection threshold value may be referred to as a second predetermined minimum deflection. The second end condition is that a timeout occurs, which results in the second deflection test result being deemed as "fail", because the proof masses could not be deflected by the desired amount during the maximum allocated time period, although expected, and a timeout occurs. In the second deflection state 308, timeout refers to expiry of a second deflection period that starts upon entering the second deflection state 308. Since the deflection is measured with circuitry that is primarily used for detecting acceleration, the first end condition may be determined as an equivalent acceleration value, although the self-test deflection is not actually caused by acceleration. In an accelerometer designed for ground vehicle use, an exemplary minimum deflection for the equivalent acceleration value may be 6g or 8g, but depending on application for which the accelerometer is designed for, the minimum deflection may be anything between 0.1g and 1000g.

According to some embodiments, the first and second predetermined minimum deflections are equal, but determined in opposite directions. The first and a second predetermined minimum deflections may also have mutually different values.

According to some embodiments, first and second deflection periods are equal, but may also have mutually different values.

Upon determining that the first end condition used in the first deflection state 304 and/or in the second deflection state 308 was fulfilled when one of the channels A1_DEC or A2_DEC reaches the desired deflection threshold value, an additional condition may be determined (not shown) that deflection of the other channel that did not cause the first deflection to be fulfilled is determined to confirm that also the other proof mass was deflected. The threshold value for "pass" result for deflection at the other channel at the time reaching the desired deflection threshold value by the first one of the two channels can be set lower than the first end condition set for the first deflection state 304 and/or for the second deflection state 308. For example, the threshold value for the second deflection may be 1g to 8g less than the first end condition.

Upon reaching one of the end conditions of the second deflection state 308, the STM proceeds to the second return state 310, which corresponds to the first return state 306. No second bias voltage nor any other deflecting bias voltage is applied to the proof masses during bias periods of the second return state 310. The STM remains in the second return state 310, until the return state condition is fulfilled. Preferably the return state condition in the second return state is the same as in the first return state. The return state condition may be for example that average value of digitized proof mass equivalent capacitance signals A1_DEC and A2_DEC, i.e. (A1_DEC+A2_DEC)/2, is determined to fall within a predetermined return threshold window relative to the previously calculated offset value, in which case the second return test result is "pass". Alternatively, the STM remains in the second return state 306 until a second return timeout passes, in which case the second return test result is "fail". In the second return state 310, the second return timeout refers to expiry of a second maximum return period that starts upon entering the second return state 310. As an alternative implementation to the second return timeout, a second return time window may be determined for the second return state 310, such that the second return test is deemed as "pass", if the second return state condition is achieved within the second return time window, and the second return test is deemed to "fail" otherwise. Preferably, the end time of the second return time window would then coincide with end of the second return period. For a symmetrical design, the second return time window may be equal to the first return time window, but the first and second time windows may also be different from each other. The averaged value is again independent of external acceleration. The return threshold window is preferably determined such that it includes the offset value and may allow a small deviation from the offset value.

According to some embodiments, first and second return periods are equal, but may also have mutually different values.

Upon reaching the predefined return threshold or the timeout in the second return state 310, the STM proceeds to the end stage 312 of the STM. If states 304, 306, 308 and 310 have been determined to end with "pass" status, the self-test ends and the tested channel is given a "pass" status. According to some embodiments, if there is one or more failed states, the overall self-test ends with a "fail" status. According to some embodiments, a predefined number of retests are allowed before the overall self-test is deemed to fail. A re-test may restart from the offset determination state 302, as illustrated with dashed arrow 320, or from the first deflection state 304, as illustrated with dashed arrow 321. Restarting from the offset determination state 302 is beneficial, since it allows re-measuring initial offset in case the root cause for self-test failure was in the determined offset for example due to external disturbance rather than due to operation of the double differential MEMS accelerometer itself, i.e. its proof mass(es).

For simplicity, the MOST was described above for a single channel of a single axis accelerometer, i.e. an accelerometer that measures acceleration along a single axis. When applying the same principle to an accelerometer with two or three detection axis, design of MOST state machine or state machines need some further considerations, depending on design of the MEMS device. A MEMS device may comprise several accelerometers, but also other types of MEMS sensors, such as gyroscopes and/or pressure sensors. If the MEMS device provides output signals in parallel, also MDST tests can run in parallel on different channels. However, clocking of all channels should remain in MOST mode, such as that illustrated in the figure 2, until self-testing of all channels has been completed. MDST mode refers to arrangement in which clocking scheme is configured specifically for MOST operations, including but not limited to detecting proof mass equivalent capacitance values (C1-C2) and (C3-C4), and optionally sum capacitance values (C1+C2) and (C3+C3). The MDST mode requires different clocking than the normal double differential acceleration measurement mode, in which clocking is typically configured for obtaining respective fully differential capacitive output signal (C3-C1)+(C2-C4). If the MEMS device provides time-multiplexed output signals, output data from different channels are provided in time-multiplexed manner from a single output. If the MEMS device is time multiplexed, a time division multiplexed readout channel can alternatively operate in single-channel mode so that each channel is tested separately using the MDST test scheme as described above. If the test of any single channel fails, the test may be repeated for a predetermined number of times to avoid false positive for example due to some unexpected external disturbance. The MDST self-test result may be provided as a combined result that shows failure if any one of the tested channels failed, and/or the MDST self-test result may be provided individually for each channel, when channels are not dependent on each other. In case of mutually dependent channels, all tests must pass to achieve a total MDST self-test pass status.

According to some embodiments, time division multiplexing may also be implemented such that also the proof mass is deflected in time division multiplexed manner. In this case each channel is biased and detected during each full clock cycle. If the MEMS accelerometer has several channels, this arrangement may cause challenges due to slower deflection repetition rate, but if MEMS bandwidth is very low in comparison to the MDST clock rate used for biasing and readout, this option may provide a feasible solution that enables a short self-testing period.

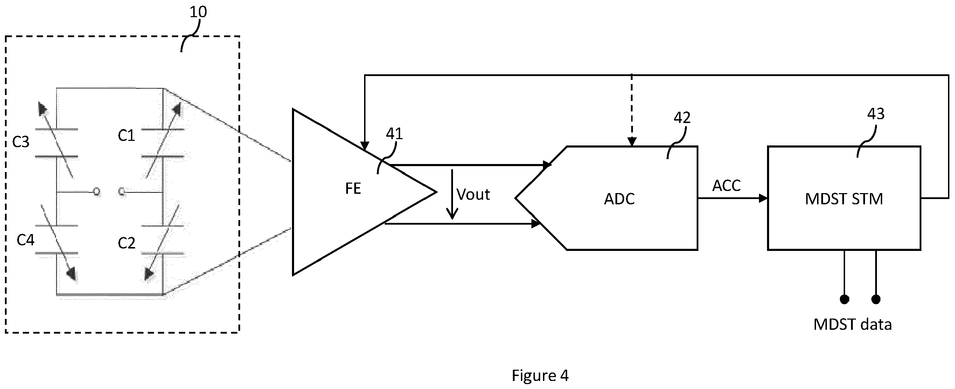

Figure 4 illustrates schematically an exemplary accelerometer mass deflection self-test system comprising the MDST STM. A front-end circuitry (FE) 41 comprises circuitry such as one or more transducers, amplifiers, and filters for converting capacitance values C1, C2, C3 and C4 of the MEMS accelerometer 10 into an analog output voltage Vout. The FE 41 further comprises circuitry for providing the bias voltage during the MOST. The analog output voltage Vout is digitized by the analog-to-digital converter (ADC) 42, which produces a digital output signal "ACC". In the normal operating mode, the digital output signal ACC represents detected acceleration. In the MDST mode the ACC represents desired digital input values for the MDST STM 43. The MDST STM provides control of one or more signals for the FE 41, for controlling operation of the FE 41 during the MOST. This control determines when the FE 41 performs biasing of capacitors C1, C2 C3 and/or C4, when the FE causes resetting and so on. Optionally, the MDST STM 43 may also control operation of the ADC 42, as illustrated by the dashed arrow. The MDST STM output MDST data, which represents results of the self-testing, such as timing and/or status data from states of the MDST STM.

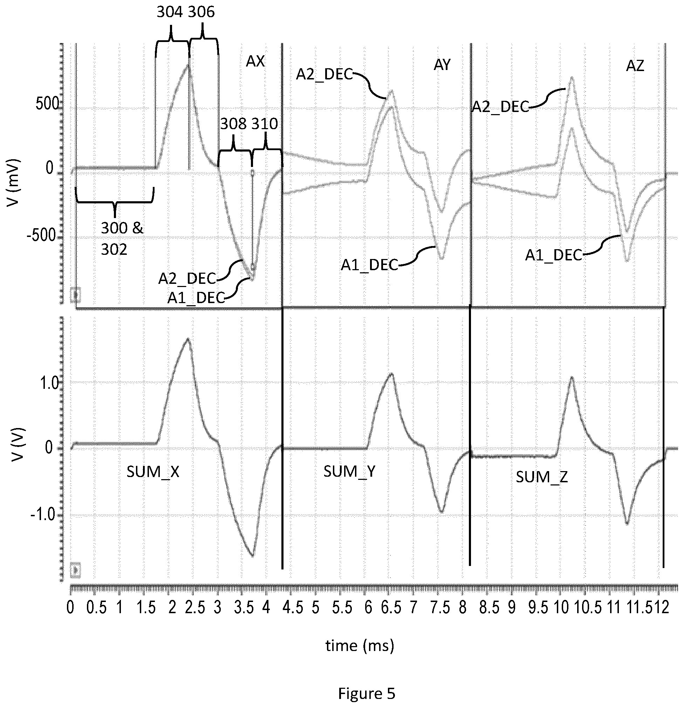

A simulated example of a self-test "pass" case test waveform is shown in the Figure 5, where all states end with "pass" status. The example in Figure 5 shows simulated self-testing of three channels, each representing MDST performed using deflection of the double differential proof masses using one pair of common stators associated with proof masses configured to detect acceleration along one of three axes (X, Y, Z) of a three-axis double differential MEMS accelerometer. STM states explained in connection with Figure 3 are illustrated in the "AX" graph on top left portion, but the same STM states can be easily identified from all graphs. The upper row shows digitized proof mass equivalent capacitance signals A1_DEC and A2_DEC on three different channels. The tested channel is changed after each self-test is completed, so both the settling wait state 300 and the offset determination state 302 are applied at the beginning of self-testing each new channel. In this simulated example, a sinusoidal external acceleration is visible in the A1_DEC and A2_DEC data on Y and Z axes, causing a clear difference between the obtained A1_DEC and A2_DEC values. As expected, external acceleration is not visible in the sum data (A1_DEC+A2_DEC) marked for different channels as SUM_X, SUM_Y, SUM_Z, shown at the bottom half. Some offset can be seen during the settling wait state 300 and the offset determination state 302, approximately 100 mV at the X-axis, and -100 mV at the Z-axis. The peak sum data is dependent on external acceleration, since deflection state is stopped using single differential data (A1_DEC or A2_DEC) as the deflection threshold value. In addition to the effect on deflection threshold value, external acceleration further causes some additional variation in the timings of states.

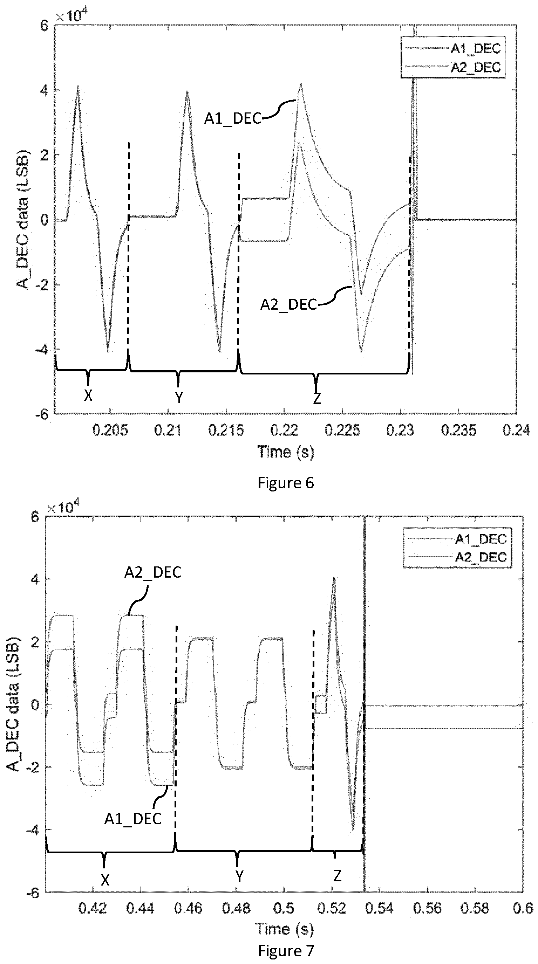

Figure 6 illustrates digitized proof mass equivalent capacitance signals A1_DEC and A2_DEC of an actual MOST measurement performed on X-, Y- and Z-axes of a three-axis accelerometer. The Z-axis is affected by gravity, but no additional external accelration was applied during this test. In this example, the output data is represented using LSB (least significant bit) of the ADC converting capacitance value into a digital as a scale.

Figure 7 illustrates measured MOST data of a case where measured deflection direction is deemed to fail. The filed self-test is repeated once, after which the self-test proceeds to test the next channel. The self-test sequence is similar to previous examples, in order 1) X-axis, 2) Y-axis, 3) Z-axis. In this example, the gravity is in X-axis direction, and no other external acceleration is applied. In this test, deflection fails in X-axis and Y-axis tests, thus both X- and Y-channel tests are deemed as "fail", and only the Z-axis test is deemed as "pass". This type of failure may be caused by an error in a variable that controls polarity of the read pulse or polarity of output signal of a channel, or a bit value is reversed in a memory or a flipflop that causes a configuration bit to be reversed.

It is apparent to a person skilled in the art that as technology advanced, the basic idea of the invention can be implemented in various ways. The invention and its embodiments are therefore not restricted to the above examples, but they may vary within the scope of the claims.

## Claims

1. A method for self-testing a capacitive MEMS accelerometer comprising a first proof mass and a second proof mass, the first and second proof masses arranged in double differential configuration, wherein
- the first proof mass is associated with two sensing capacitors (C1, C2) configured to capacitively detect position of the first proof mass in relation to a first stator and a second stator, and
- the second proof mass is associated with two sensing capacitors (C3, C4) configured to capacitively detect position of the second proof mass in relation to a third stator and a fourth stator, and
- wherein the first stator is electrically coupled to the third stator and the second stator is electrically coupled to the fourth stator,
the method comprising:
- deflecting the first proof mass and the second proof mass in a first direction by applying a first bias voltage across the sensing capacitor (C1) of the first stator and across the sensing capacitor (C3) of the third stator during bias periods of a bias voltage pattern, wherein the bias voltage pattern is a repeating pattern comprising intermittent bias periods and readout periods, wherein a deflecting bias voltage is selectively applied during bias periods, no deflecting bias voltage is applied during readout periods, and wherein said bias voltage pattern is repeated with a frequency that is above a resonance frequency and/or a -3dB bandwidth of the capacitive MEMS accelerometer,
**characterized by** obtaining, during each readout period, a first output data representing a proof mass equivalent capacitance signal (C1-C2) of the first proof mass, and a second output data representing a proof mass equivalent capacitance signal (C3-C4) of the second proof mass, wherein the first output data and the second output data are obtained at mutually different times during the readout period.

2. The method according to claim 1, further comprising:
- during each readout period, obtaining a third output data representing a sum capacitance value (C1+C2) of the first proof mass and a fourth output data representing a sum capacitance value (C3+C4) of the second proof mass, wherein each of the first output data, the second output data, the third output data and the fourth output data are all obtained during the readout period, and
- calculating a first normalized differential capacitance value by dividing the first output data with the third output data and calculating a second normalized differential capacitance value by dividing the second output data with the fourth output data.

3. The method according to claim 1 or 2, further comprising:
- discontinuing said applying the first bias voltage upon determining, based on said first and second output data, or when dependent on claim 2, based on said first and second normalized differential capacitance values, that deflection of any one of the first proof mass and the second proof mass by the bias voltage pattern has reached a first minimum required deflection magnitude, or upon determining expiry of a first predetermined maximum deflection period, and
- after said discontinuing, applying the bias pattern without applying any deflecting bias voltage during bias periods for causing the first and second proof mass to return towards a rest position.

4. The method according to claim 3, further comprising:
- while applying the bias pattern without applying any deflecting bias voltage during bias periods, obtaining the first and second output data, and, when dependent on claim 2, the third and fourth output data,
- determining, based on average of the first and second output data, or when dependent on claim 2, based on average of the first and second normalized differential capacitance values, that the first proof mass and the second proof mass have reached the rest position, or determining an expiry of a first return period.

5. The method according to claim 4, further comprising:
- upon determining that the first proof mass and the second proof mass have reached the rest position, or upon expiry of the first return period, applying a second bias voltage across the sensing capacitor (C2) of the second stator and across the sensing capacitor (C4) of the fourth stator during bias periods for deflecting the first proof mass and the second proof mass in a second direction opposite to the first direction,
- obtaining the first and second output data, and optionally, when dependent on claim 2, obtaining the third and fourth output data and calculating the first normalized differential capacitance value and the second normalized differential capacitance value,
- discontinuing said applying the second bias voltage upon determining, based on said first and second output data, or when dependent on claim 2, based on said first and second normalized differential capacitance values, that deflection of any one of the first proof mass and the second proof mass has reached a second minimum required deflection magnitude, or upon expiry of a second predetermined maximum deflection period,
- after said discontinuing, applying the bias voltage pattern without applying any deflecting bias voltage during bias periods to cause the first and second proof mass to return towards the rest position,
- while applying the bias voltage pattern without applying any deflecting bias voltage during bias periods, obtaining the first and second output data, and, when dependent on claim 2, the third and fourth output data, and
- determining, based on average of the first and second output data, or when dependent on claim 2, based on average of the first and second normalized differential capacitance values, that the first proof mass and the second proof mass have reached the rest position, or determining an expiry of a second return period.

6. The method according to any one of claims 3 to 5, wherein the self-text comprises one or two deflection parts each comprising deflecting the first and second proof masses by applying the respective first or second bias voltages, wherein:
- a deflection part of the self-testing is deemed to pass, if discontinuing said applying the respective first or second bias voltage during bias periods of the bias voltage pattern is performed upon determining that deflection of the first proof mass or the second proof mass has reached the respective first or second minimum required deflection magnitude before expiry of the respective first or second predetermined maximum deflection period, and
- a deflection part of the self-testing is deemed to fail, if said discontinuing said applying the respective first or second bias voltage is performed upon expiry of a predetermined maximum deflection period.

7. The method according to any one of claims 4 to 6, wherein the method comprises one or two return parts during which the first and second proof masses are caused to return towards the rest position by not applying any deflecting bias voltage during the bias periods, wherein:
- a return part of the self-testing is deemed to pass, if the first proof mass and the second proof mass have reached the rest position within the respective first or second predetermined maximum return period after discontinuing applying the respective first or second bias voltage, or if the first proof mass and the second proof mass have reached the rest position within a respective first or second return time window, and
- the return part of the self-testing is deemed to fail, if it is determined that the predetermined first or second maximum return period has expired without the first proof mass and the second proof mass being determined to have reached the rest position, or if it is determined that the first proof mass and the second proof mass are not being determined to have reached the rest position within the respective first or second return time window.

8. The method according to any one of the preceding claims, further comprising:
- waiting over a predetermined waiting period after the capacitive MEMS accelerometer has entered a self-test mode in which the bias voltage pattern is applied thereto, or a channel of a multi-channel capacitive MEMS accelerometer to be self-tested has been changed, and,
- after expiry of the predetermined waiting period, applying the bias voltage pattern without applying any deflecting bias voltage during the bias period, and obtaining a plurality of samples of the first output data and the second output data during the readout periods, and when depending on claim 2, further obtaining a plurality of samples of the third output data and the fourth output data,
- determining an offset value by averaging the plurality of samples of the first and second output data during the readout periods, or averaging the plurality of first normalized differential capacitance values and second normalized differential capacitance values, and
- on basis of the offset value, determining at least one threshold value or a threshold window for determining whether the first proof mass and/or the second proof mass have reached the rest position.

9. The method according to any one of the preceding claims, wherein the self-test can be repeated for a predetermined number of times, if any one part of the self-test was deemed to fail.

10. The method according to claim 9, when dependent on claim 8, wherein, when repeating the self-test, the self-test is restarted from the step of applying the bias voltage pattern without applying the bias voltage during the bias period for redetermining the offset value.

11. A state machine configured to control the mass deflection self-testing of a capacitive MEMS accelerometer, wherein the self-testing is configured to apply abias voltage pattern that is a repeating pattern comprising intermittent bias periods and readout periods, wherein a deflecting bias voltage is selectively applied during said bias periods and deflecting bias voltage is not applied during said readout periods, and wherein said bias voltage pattern is repeated with a frequency that is above a resonance frequency and/or a -3dB bandwidth of the capacitive MEMS accelerometer, wherein the state machine comprises, in order of performance:
- a wait state for waiting over a predetermined waiting period after the capacitive MEMS accelerometer has entered into a self-test mode, or a channel to be self-tested has been changed,
- an offset determination state for determining an offset value by averaging a plurality of samples of first and second output data during the readout periods of the bias voltage pattern, while the bias voltage pattern is applied without applying any deflecting bias voltage during the bias periods,
- a first deflection state for deflecting the first proof mass and the second proof mass in a first direction by applying a first bias voltage across a sensing capacitor (C1) of a first stator and across a sensing capacitor (C3) of a third stator during bias periods of the bias voltage pattern, wherein the first stator is electrically coupled with the third stator,
- a first return state for causing the first proof mass and the second proof mass to return towards a rest position by not applying any deflecting bias voltage during the bias periods across said sensing capacitors,
- a second deflection state for deflecting the first proof mass and the second proof mass in a second direction opposite to the first direction by applying a second bias voltage across a sensing capacitor (C2) of the second stator and across a sensing capacitor (C4) of the fourth stator, wherein the second stator is electrically coupled with the fourth stator,
- a second return state for causing the first proof mass and the second proof mass to return towards the rest position by not applying any deflecting bias voltage across said sensing capacitors, and
- an end state for determining, whether results of the first and second deflection states and first and second return states was determined as fail or pass, and if any one of these states was fail, optionally repeating the self-test starting from the offset determination state.

12. A MEMS device comprising at least one capacitive MEMS accelerometer, wherein the MEMS device further comprises circuitry implementing the state machine according to claim 11.
